# EUROPÄISCHE PATENTSCHRIFT

(11) **EP 3 433 693 B1**
(45) Veröffentlichungstag und Bekanntmachung des Hinweises auf die Patenterteilung: **06.05.2020**
(21) Anmeldenummer: 17714163.7
(22) Anmeldetag: 21.03.2017
(51) Int. Cl.: G05D 23/19, F24D 19/10, G08B 23/00, G08B 25/06, G07C 5/00, H04M 11/04

(54) **VERFAHREN UND SYSTEM ZUR ÜBERWACHUNG EINER BASISEINRICHTUNG DURCH EIN MOBILES ENDGERÄT**
METHOD AND SYSTEM FOR MONITORING A BASE DEVICE BY A MOBILE TERMINAL DEVICE
PROCÉDÉ ET SYSTÈME DE SURVEILLANCE D'UN DISPOSITIF DE BASE PAR UN TERMINAL MOBILE

(30) Priorität: 22.03.2016 DE 102016105340
(43) Veröffentlichungstag der Anmeldung: 30.01.2019
(73) Patentinhaber: Webasto SE, 82131 Stockdorf (DE)
(72) Erfinder: BÄCKER, Christian, 82131 Stockdorf (DE); PÖHNER, Michael, 82131 Stockdorf (DE); HABBEL, Georg, 82131 Stockdorf (DE); SCHWEYER, Christian, 82131 Stockdorf (DE); BECKERS, Markus, 82131 Stockdorf (DE); RUTSCHE, Andreas, 82131 Stockdorf (DE); WEGENER, Fritz, 82131 Stockdorf (DE); ZOSKE, Martin, 82131 Stockdorf (DE); SCHWANECKE, Michael, 82131 Stockdorf (DE)
(74) Vertreter: Zech, Stefan Markus
(86) Internationale Anmeldenummer: PCT/EP2017/056624
(87) Internationale Veröffentlichungsnummer: WO 2017/162626

(56) Entgegenhaltungen:
- WO-A1-01/33149
- WO-A1-99/22284
- CN-A- 101 498 468
- DE-A1-102012 220 598
- US-A1- 2015 022 339

## Beschreibung

Die Erfindung betrifft ein Verfahren sowie ein System zur Überwachung einer Basiseinrichtung durch ein mobiles Endgerät.

Verfahren und Systeme zur Überwachung einer Basiseinrichtung sind grundsätzlich bekannt. DE 10 2012 220 598 A1 beschreibt ein Überwachungssystem zur Überwachung von Luftparametern in einem Raum sowie eine Dunstabzugsvorrichtung zur Verwendung in einem solchen Überwachungssystem. In Abhängigkeit von einem Überwachungsergebnis können dann beispielsweise ein Filter, Fenster oder Türen sowie Luftfördervorrichtungen beeinflusst werden. Zudem können auch Heizungen oder Klimaanlagen entsprechend eingeregelt werden.

Weiterhin sind Luftheizgeräte bekannt, die über einen Raumtemperatursensor verfügen, der für die Regelung des Heizgerätes verwendet wird. Weiterhin sind Bedienelemente bekannt, die eine Aktivierung des Luftheizgerätes (der Heizung) über ein Mobiltelefon ermöglichen. Eine hier erforderliche Kommunikation kann über das Mobiltelefonnetz bereitgestellt werden. Auch Wasserheizgeräte verfügen oftmals über einen Temperatursensor, der zur Steuerung oder Regelung des Heizgerätebetriebs verwendet werden kann. Außerdem kann ein Signal des Temperatursensors auch im Rahmen einer Überhitzungsüberwachung verwendet werden. Weiterhin können derartige Wasserheizgeräte oftmals auch eine am Heizgerät anliegende Spannung auswerten. Grundsätzlich sind weiterhin Bedienelemente bekannt, die eine Aktivierung des Wasserheizgerätes über ein Mobiltelefon ermöglichen, wobei die hierfür erforderliche Kommunikation über ein Mobiltelefon-Netz bereitgestellt wird. In diesem Zusammenhang wird die Ausnutzung der durch die Komponenten Heizgerät bzw. Mobiltelefon bereitgestellten Funktionalitäten als verbesserungswürdig angesehen.

Es ist daher Aufgabe der Erfindung, die durch eine Basiseinrichtung mit einer Heizeinrichtung sowie ein mobiles Endgerät bereitgestellten Funktionalitäten möglichst effizient zu nutzen.

Diese Aufgabe wird durch die Merkmale des Anspruchs 1 gelöst.

Insbesondere wird die Aufgabe durch ein Verfahren zur Überwachung einer Basiseinrichtung, insbesondere eines Gebäudes oder Gebäudeteils oder eines Fahrzeugs, mittels eines mobilen Endgerätes gelöst, wobei die Basiseinrichtung mindestens eine Heizeinrichtung aufweist, umfassend die Schritte:
a) Bestimmen eines aktuellen Zustandes der Basiseinrichtung durch die Heizeinrichtung, umfassend das Bestimmen einer aktuellen Temperatur an oder in der Basiseinrichtung durch einen Temperatursensor der Heizeinrichtung und/oder das Bestimmen einer Energieversorgung der Heizeinrichtung,
b) Überprüfen, ob es sich bei der aktuellen Zustandsänderung um eine normale Zustandsänderung oder eine anomale Zustandsänderung handelt und
c) Ausgeben von entsprechender Information an das und/oder durch das mobile Endgerät zumindest bei Feststellung einer anomalen Zustandsänderung.

Ein Kerngedanke der Erfindung liegt darin, die (zumindest grundsätzlich) ohnehin vorgesehenen Strukturen einer Basiseinrichtung mit einer Heizeinrichtung sowie eines mobilen Endgerätes zur Überwachung der Basiseinrichtung zu nutzen. Beispielsweise wird bei üblichen Luftheizgeräten, z.B. für Gebäude, ohnehin die Raumtemperatur zur Regelung derselben gemessen. Insofern kann auch eine anomale Zustandsänderung, (wie z.B. ein nicht natürlich erklärbarer Anstieg der Temperatur) gemessen werden. Ein derartiger nicht natürlich erklärbarer Anstieg kann dann beispielsweise per Textnachricht (z.B. SMS oder einem, gegebenenfalls auf dem Internet basierenden, Nachrichtendienst) oder Anruf an ein mobiles Endgerät (insbesondere Mobiltelefonat) kommuniziert werden. Es wird also entsprechende Information "an das" mobile Endgerät ausgegeben (bzw. übermittelt). Denkbar ist es sicherlich auch, die "Rohdaten" eines derartigen Temperatursensors (bzw. Rohdaten einer Bestimmungseinrichtung zur Bestimmung eines aktuellen Zustandes der Basiseinrichtung) an ein mobiles Endgerät zu übermitteln, so dass dort eine Überprüfung des aktuellen Zustandes oder der aktuellen Zustandsänderung (im Sinne des Buchstabens b, weiter oben) erfolgen kann. Wird dann ein anomaler Zustand oder eine anomale Zustandsänderung (beispielsweise ein nicht natürlich erklärbarer Anstieg der Temperatur) festgestellt, kann eine entsprechende Ausgabe "durch das" mobile Endgerät erfolgen (beispielsweise optisch und/oder akustisch, beispielsweise in Textnachrichtenform und/oder durch eine Leuchteinrichtung, wie beispielsweise eine LED, und/oder durch einen Warnton). Im Allgemeinen kann das Verfahren zur Feststellung eines Brandes (also als Feuermelderanlage) verwendet werden.

Wie sich auch aus der obigen Erläuterung ergibt, soll also insbesondere unter einem Ausgeben von entsprechender Information "an das" mobile Endgerät ein Übermitteln des Ergebnisses des Schrittes b von der Basiseinrichtung an das mobile Endgerät verstanden werden. Unter einem Ausgeben von Information "durch das" mobile Endgerät kann im Allgemeinen eine Datenausgabe verstanden werden, die das Ergebnis des Schrittes b zum Inhalt hat und im Speziellen ein Ausgeben von optischer und/oder akustischer Information an den Besitzer des mobilen Endgerätes (beispielsweise Aufleuchten einer LED oder ein Warnton oder eine Textmeldung).

Insbesondere wenn es sich bei der Heizeinrichtung um eine Wasserheizeinrichtung (Wasserheizgerät) handelt, kann eine (ohnehin oftmals vorgenommene) Messung der Wassertemperatur (Kühlwassertemperatur) weiter genutzt werden. Wie oben im Zusammenhang mit der Messung der Lufttemperatur erläutert, kann beispielsweise ein "nicht natürlich erklärbarer Anstieg der Wassertemperatur" (also eine anomale Zustandsänderung) an ein mobiles Endgerät kommuniziert werden. Alternativ oder zusätzlich ist es jedoch auch möglich, eine Energieversorgung (insbesondere eine anliegende Spannung) der Heizeinrichtung zu bestimmen (zu messen). Wird beispielsweise ein Anstieg der Energieversorgung (Spannungsanstieg) festgestellt, der auf einen im Betrieb befindlichen Energieversorger (z.B. Lichtmaschine) hinweist (obwohl beispielsweise die Basiseinrichtung inaktiv sein sollte, da beispielsweise in einem geparkten und/oder verriegelten Zustand), kann eine derartige anomale Zustandsänderung entsprechend ausgegeben werden (beispielsweise per Textnachricht oder Anruf an das mobile Endgerät). Die Bordnetzspannung, insbesondere deren zeitlicher Verlauf, kann auch zur Bewertung des technischen Zustandes der Starterbatterie oder der Lichtmaschine genutzt werden: Fällt die Spannung beim Anlassen z.B. unter 9,5 V ist ein baldiger Tausch der Batterie notwendig; liegt die Spannung im Fahrbetrieb z.B. unter 13,5 V, ist die Lichtmaschine defekt.

Im Allgemeinen ist unter einem "normalen Zustand" insbesondere ein Zustand zu verstehen, der beim üblichen Betrieb der Basiseinrichtung eingenommen wird. Derartige vorbestimmte normale Zustände können (z.B. auf einem elektronischen Speichermedium) hinterlegt sein oder werden (beispielsweise nach einem gesonderten Verfahrensschritt der Festlegung von normalen Zuständen). Ein normaler Zustand kann beispielsweise durch eine bestimmte Temperatur von z.B. 25 °C definiert sein. Eine Vielzahl von normalen Zuständen kann dann beispielsweise durch einen Temperaturbereich, z.B. von 0 ° C bis 40 ° C, definiert sein. Weiterhin kann sich ein normaler Zustand beispielsweise dadurch auszeichnen, dass die Basiseinrichtung als in Betrieb genommen gilt und gleichzeitig die Heizeinrichtung mit Energie versorgt wird. Gilt die Basiseinrichtung demgegenüber nicht als im Betrieb befindlich (z.B. da abgesperrt) und wird die Heizeinrichtung dennoch mit Energie versorgt liegt ein anomaler Zustand vor, der ggf. auf einen Diebstahl schließen lässt. Weiterhin ist unter einer "normalen Zustandsänderung" insbesondere eine Zustandsänderung zu verstehen, die beim üblichen Betrieb der Basiseinrichtung vorliegen kann. Derartige vorbestimmte normale Zustandsänderungen können (z.B. auf einem elektronischen Speichermedium) hinterlegt sein oder werden (beispielsweise durch einen gesonderten Verfahrensschritt der Festlegung von normalen Zustandsänderungen). Weiterhin kann sich eine normale Zustandsänderung beispielsweise dadurch auszeichnen, dass die Basiseinrichtung als in Betrieb genommen gilt und gleichzeitig ein vorbestimmter Anstieg einer Versorgungsspannung der Heizeinrichtung bestimmt wird. Gilt die Basiseinrichtung demgegenüber nicht als im Betrieb befindlich (z.B. da abgesperrt) und ist dennoch ein Spannungsanstieg festzustellen, liegt ein anomaler Zustand vor, der ggf. auf einen Diebstahl schließen lässt.

Unter einem aktuellen Zustand ist insbesondere ein Ist-Zustand der Basiseinrichtung zu verstehen. Beispielsweise kann unter einem aktuellen Zustand die aktuelle (durch einen Temperatursensor) gemessene Temperatur oder der aktuell bestimmte Zustand einer Energieversorgung (beispielsweise eine anliegende Spannung) verstanden werden. Eine aktuelle Zustandsänderung ist dementsprechend ein Vergleich zwischen dem aktuellen Zustand und einem in der Vergangenheit liegenden Zustand (beispielsweise dem unmittelbar zuvor bestimmten Zustand). Im Allgemeinen kann die Zustandsänderung durch die Bildung einer Differenz des aktuellen Zustandes und einem vorherigen (insbesondere dem unmittelbar vorherigen) Zustand ermittelt werden und/oder durch Bildung eines Differentials und/oder eines Quotienten (aus aktuellem Zustand und vorhergehendem, insbesondere unmittelbar vorhergehendem bestimmtem Zustand). Der für die Bestimmung der normalen bzw. anomalen Zustandsänderung relevante Zeitraum kann beispielsweise mindestens 2 Sekunden oder mindestens 5 Sekunden oder mindestens 30 Sekunden oder mindestens 2 Minuten und/oder höchstens 5 Minuten oder höchstens 3 Minuten betragen.

Der Temperatursensor kann drahtlos oder drahtgebunden mit den übrigen Komponenten der Heizeinrichtung (insbesondere mit einer Steuereinheit) kommunizieren (verbunden sein). Zur Steuerung, insbesondere Regelung der Heizeinrichtung kann eine entsprechende Steuereinheit vorgesehen sein. Diese kann zur Kommunikation mit dem mobilen Endgerät ausgebildet sein.

Die oben genannte Aufgabe wird weiter gelöst durch ein System zur Überwachung einer Basiseinrichtung, insbesondere eines Gebäudes oder Gebäudeteiles oder eines Fahrzeuges, mittels eines mobilen Endgerätes, wobei die Basiseinrichtung mindestens eine Heizeinrichtung aufweist, umfassend:
- mindestens eine Bestimmungseinrichtung zum Bestimmen eines aktuellen Zustandes der Basiseinrichtung durch die Heizeinrichtung, umfassend das Bestimmen einer aktuellen Temperatur an oder in der Basiseinrichtung durch einen Temperatursensor der Heizeinrichtung und/oder das Bestimmen einer Energieversorgung der Heizeinrichtung,
- eine Überprüfungseinrichtung zur Überprüfung, ob es sich bei der aktuellen Zustandsänderung um eine normale Zustandsänderung oder eine anomale Zustandsänderung handelt und
- eine Ausgabeeinrichtung zum Ausgeben von entsprechender Information an das und/oder durch das mobile Endgerät zumindest bei Feststellung einer anomalen Zustandsänderung.

Die oben genannte Aufgabe wird weiterhin gelöst durch ein computerlesbares Speichermedium, insbesondere eines mobilen Endgerätes, vorzugsweise Mobiltelefons, das Instruktionen enthält, die mindestens einen Prozessor dazu veranlassen, ein Verfahren der oben beschriebenen Art zu implementieren, wenn die Instruktionen durch den Prozessor ausgeführt werden.

Im Schritt a wird insbesondere eine Raumtemperatur eines Raumes, insbesondere innerhalb des Gebäudes, gemessen, wobei ein anomaler Zustand bei Überschreiten einer vorbestimmten Raumtemperatur und/oder eine anomale Zustandsänderung bei Überschreiten einer vorbestimmten Raumtemperaturänderung, insbesondere eines vorbestimmten Raumtemperaturanstieges, festgestellt wird. In diesem Zusammenhang kann eine Maximaltemperatur von beispielsweise nicht mehr als 50° oder nicht mehr als 40° festgelegt werden, wobei unterhalb dieser Maximaltemperatur ein normaler ("zulässiger") Zustand vorliegt und oberhalb dieser Maximaltemperatur ein anomaler Zustand. Dadurch kann beispielsweise ein Feuer oder Brand auf einfache Art und Weise detektiert werden. Alternativ oder zusätzlich kann auch ein Grenzwert für eine ("zulässige") Zustandsänderung definiert werden. Dieser Grenzwert kann beispielsweise ≤ 1 °C pro 5 Minuten oder ≤ 1 °C pro Minute betragen. Unterhalb dieses Grenzwertes kann ein normaler Zustand vorliegen, oberhalb dieses Grenzwertes ein anomaler Zustand. Dadurch kann besonders zuverlässig ein Feuer oder eine ähnliche unerwünschte Erwärmung festgestellt werden.

In einer alternativen Ausführungsform kann in Schritt a eine Kühlfluidtemperatur (vorzugsweise Kühlwassertemperatur), insbesondere innerhalb eines Kraftfahrzeuges, gemessen werden, wobei ein anomaler Zustand bei Überschreiten einer vorbestimmten Kühlfluidtemperatur (Kühlwassertemperatur) und/oder eine anomale Zustandsänderung bei Überschreiten eines vorbestimmten Kühlfluidtemperaturanstieges (Kühlwassertemperaturanstieges) festgestellt werden kann. Die vorbestimmte Kühlfluidtemperatur beträgt beispielsweise 40 °C (oder weniger) oder 80 °C (oder weniger). Der vorbestimmte Kühlfluidtemperaturanstieg kann beispielsweise 5 °C pro Minute (oder weniger) oder 10 °C pro Minute (oder weniger) betragen.

Bei der "Heizeinrichtung" kann es sich um eine Einrichtung handeln, die zur (gewünschten) Aufheizung eines Raumes oder eines Wärmeträgermediums (z.B. Wärmeträgerfluides) vorgesehen und bestimmt ist.

Durch die Überwachung der Kühlfluidtemperatur beispielsweise innerhalb eines Kraftfahrzeuges kann zumindest indirekt auf einen Diebstahl geschlossen werden, beispielsweise wenn sich das Fahrzeug eigentlich in einem "geparkten" Zustand befindet (also abgeschlossen ist) und dennoch aufgrund der Detektion einer erhöhten Temperatur auf einen Betrieb des Fahrzeuges zu schließen ist. Insofern kann hier die Diebstahlsicherheit verbessert werden.

Alternativ oder zusätzlich kann in Schritt a eine am Heizgerät anliegende Spannung gemessen werden, wobei ein anomaler Zustand bei Überschreiten einer vorbestimmten Spannung und/oder eine anomale Zustandsänderung bei Überschreiten eines vorbestimmten Spannungsanstieges festgestellt werden kann. Auch dadurch kann vorteilhafterweise eine Diebstahlwarnung erfolgen, beispielsweise dann, wenn ein Spannungsanstieg auf eine im Betrieb befindliche Lichtmaschine hinweist, obwohl sich ein Kraftfahrzeug eigentlich "in Ruhe" befinden sollte. Die vorbestimmte Spannung kann beispielsweise 10 V (oder weniger) oder 30 V (oder weniger) betragen. Der vorbestimmte Spannungsanstieg kann beispielsweise 5 V pro Sekunde (oder weniger) oder 10 V pro Sekunde (oder weniger) betragen. In jedem Fall wird die Möglichkeit der Feststellung eines Diebstahls verbessert.

Bei Feststellen eines anomalen Zustandes kann ein automatischer Anruf und/oder eine Textnachricht an das mobile Endgerät erfolgen. Alternativ oder zusätzlich kann bei Feststellen eines anomalen Zustandes eine optische und/oder akustische Warnung in dem mobilen Endgerät (beispielsweise mittels eines dort installierten Computerprogramms bzw. einer "App") generiert werden.

Schritt a und/oder b und/oder c kann vorzugsweise durch eine Eingabe in das mobile Endgerät initiiert werden. Beispielsweise kann vorzugsweise über Computersoftware (App) eines mobilen Endgerätes (Mobiltelefons) einer oder mehrere der Schritte a bis c des Verfahrens durchgeführt werden.

In einer Ausführungsform wird Schritt b und/oder c durch das mobile Endgerät, beispielsweise eine dort abgespeicherte Computersoftware (App) durchgeführt. Bei dieser Ausführungsform werden "lediglich" die Rohdaten im Schritt a an das mobile Endgerät übermittelt, so dass dort gemäß den Schritten b und c bestimmt und ausgegeben werden kann, ob ein anomaler Zustand oder eine anomale Zustandsänderung vorliegt. Alternativ oder zusätzlich kann Schritt b und/oder c durch die Basiseinrichtung durchgeführt werden. In einem solchen Fall wird dann "nur noch" in Schritt c an das mobile Endgerät eine Information dahingehend übermittelt, dass ein normaler bzw. anomaler oder eine normale bzw. anomale Zustandsänderung festgestellt wurde. Eine derartige Übermittlung kann dann beispielsweise durch Textnachrichten oder einen Anruf oder Ähnliches erfolgen. In jedem Fall kann effektiv ein anomaler Zustand bzw. eine anomale Zustandsänderung bestimmt und ausgegeben werden. In konkreten Ausführungsformen kann der aktuelle Zustand und/oder die aktuelle Zustandsänderung auf die Möglichkeit eines Brandes und/oder eines Diebstahls hin überprüft werden.

Das System zur Überwachung der Basiseinrichtung kann mindestens einen Temperatursensor zur Bestimmung einer Raumtemperatur aufweisen und/oder mindestens einen (Temperatur-)Sensor zur Bestimmung einer Temperatur eines Wärmeübertragungsmediums (z.B. Kühlfluidtemperatur, insbesondere Kühlwassertemperatur) und/oder mindestens eine Bestimmungseinrichtung zur Bestimmung einer an dem Heizgerät anliegenden Energieversorgung, insbesondere Spannung und/oder eine Einrichtung zur Erfassung und/oder Auswertung eines GPS Signals und/oder eine Einrichtung zur Erfassung und/oder Auswertung eines Luftdrucksignals aufweisen.

Weiterhin kann das System eine Übertragungseinrichtung (Übertragungsmodul, insbesondere Mobiltelefon-Modul) aufweisen, über das Daten und/oder Informationen an das mobile Endgerät, insbesondere Mobiltelefon, übermittelt werden können.

Das mobile Endgerät ist vorzugsweise ein Mobiltelefon (insbesondere Smartphone). Im Allgemeinen kann das mobile Endgerät eine Einrichtung zum Empfang eines Signals (z.B. Telefonnummer, Festnetznummer, Polizei), das vom Heizgerät ausgesendet wird, sein.

Die Überprüfungseinrichtung und/oder die Ausgabeeinrichtung können Bestandteil der Basiseinrichtung und/oder des mobilen Endgerätes sein.

Weitere Ausführungsformen ergeben sich aus den Unteransprüchen.

Nachfolgend wird die Erfindung anhand von Ausführungsbeispielen beschrieben, die anhand der Abbildungen näher erläutert werden. Hierbei zeigen:
- Figur 1:: eine schematische Ansicht eines ersten Systems zur Überwachung einer Basiseinrichtung; und
- Figur 2:: eine schematische Ansicht eines zweiten Systems zur Überwachung einer Basiseinrichtung.

In der nachfolgenden Beschreibung werden für gleiche und gleichwirkende Teile dieselben Bezugsziffern verwendet.

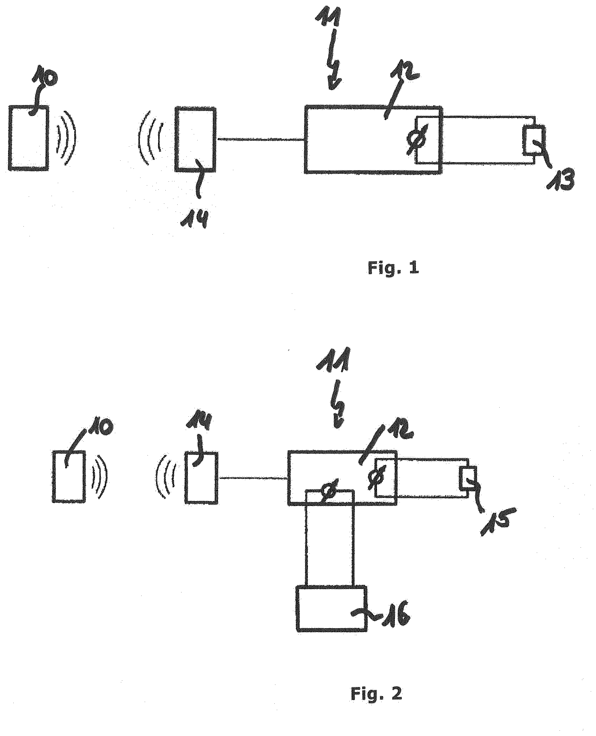

Figur 1 zeigt ein Mobiltelefon 10 sowie eine Basiseinrichtung 11, umfassend eine Heizeinrichtung zur Erwärmung der Temperatur eines Raumes.

Die Basiseinrichtung 11 umfasst ein Steuergerät 12 sowie einen Raumtemperatursensor 13 und ein Mobiltelefon-Modul 14. Über den Raumtemperatursensor 13 kann die Raumtemperatur bestimmt werden. Mittels der bestimmten Temperatur kann das Steuergerät beispielsweise die Lufttemperatur des Raumes steuern, insbesondere regeln. Weiterhin können über das Mobiltelefonmodul 14 Daten und Informationen an das mobile Endgerät 10 (Mobiltelefon) übermittelt werden. Bei dieser Übermittlung kann es sich beispielsweise um die "Rohdaten" des Raumtemperatursensors 13 handeln und/oder um ein Ergebnis einer Berechnung, beispielsweise des Steuergerätes 12, inwiefern ein aktueller Zustand ein normaler oder anomaler Zustand ist und/oder eine aktuelle Zustandsänderung eine normale oder anomale Zustandsänderung ist.

Überschreitet die gemessene Temperatur einen bestimmten Wert und/oder überschreitet ein aktueller Temperaturanstieg (allgemein: Temperaturänderung) einen bestimmten Wert, kann daraus auf das Vorliegen eines Brandes oder einer Störung geschlossen werden, die entsprechend über das mobile Endgerät 10 angezeigt werden kann.

In dem zweiten Beispiel gemäß Figur 2 ist eine Überwachung zur potentiellen Feststellung eines Diebstahls illustriert. Das mobile Endgerät 10 ist hier wiederum vorzugsweise ein Mobiltelefon. Die Basiseinrichtung 11 umfasst ein Mobiltelefon-modul 14, einen Wassertemperatursensor 15, ein Steuergerät 12 sowie eine (Fahrzeug)Batterie 16. Analog zur ersten Ausführungsform kann über das Mobiltelefonmodul eine Übertragung von Daten und/oder Information an das mobile Endgerät 10 erfolgen. Wird nun beispielsweise durch den Wassertemperatursensor ein vergleichsweise hoher Temperaturwert gemessen oder aus den Messwerten des Wassertemperatursensors ein vergleichsweise schneller (nicht natürlich erklärbarer) Anstieg der Temperatur gemessen, kann daraus auf das Vorliegen eines anomalen Zustandes bzw. einer anomalen Zustandsänderung geschlossen werden, insbesondere wenn die Basiseinrichtung geparkt und/oder abgesperrt wurde oder ansonsten in einen Ruhezustand versetzt wurde. Allgemein kann auch eine Bestimmungseinrichtung vorgesehen sein (nicht in den Figuren dargestellt), die bestimmt, ob sich die Basiseinrichtung im Betrieb oder außer Betrieb befinden sollte (beispielsweise ob die Basiseinrichtung abgesperrt ist oder betriebsbereit). Dies kann auch im Rahmen des Überwachens definiert werden, z.B. über das Mobiltelefon.

Wird durch den Wassertemperatursensor eine vergleichsweise hohe Temperatur gemessen oder aus den Werten des Wassertemperatursensors ein vergleichsweise schneller Temperaturanstieg, kann daraus auf einen Diebstahl geschlossen werden. Alternativ oder zusätzlich kann durch die Bestimmung eines Spannungsanstieges, der beispielsweise auf eine in Betrieb befindliche Lichtmaschine hinweist, auf einen Diebstahl geschlossen werden. Über das Mobiltelefonmodul 14 kann dann beispielsweise die Information, dass ein Diebstahl vorliegt (allgemein: dass sich die Basiseinrichtung in einem anomalen Zustand befindet oder eine anomale Zustandsänderung vorliegt) an das mobile Endgerät 10 übermittelt werden. Alternativ oder zusätzlich kann es auch möglich sein, dass dem mobilen Endgerät 10 nur die "Rohdaten" aus der Bestimmung der Spannung und/oder der Wassertemperatur übermittelt werden und diese Werte durch das mobile Endgerät 10 (Mobiltelefon) daraufhin überprüft werden, ob ein Diebstahl stattgefunden hat (bzw. ein anomaler Zustand vorliegt und/oder eine anomale Zustandsänderung).

An dieser Stelle sei darauf hingewiesen, dass alle oben beschriebenen Teile für sich alleine gesehen und in jeder Kombination, insbesondere die in den

Zeichnungen dargestellten Details, als erfindungswesentlich beansprucht werden. Änderungen hiervon sind dem Fachmann geläufig.

### Bezugszeichen

- 10: Mobiles Endgerät (Mobiltelefon)
- 11: Basiseinrichtung
- 12: Steuergerät
- 13: Raumtemperatursensor
- 14: Mobiltelefonmodul
- 15: Wassertemperatursensor
- 16: Fahrzeugbatterie

## Patentansprüche

1. Verfahren zur Überwachung einer Basiseinrichtung (11) mittels eines mobilen Endgerätes (10), wobei die Basiseinrichtung (11) mindestens eine Heizeinrichtung aufweist, umfassend die Schritte:
a) Bestimmen eines aktuellen Zustandes der Basiseinrichtung (11) durch die Heizeinrichtung, umfassend das Bestimmen einer aktuellen Temperatur an oder in der Basiseinrichtung (11) durch einen Temperatursensor der Heizeinrichtung und/oder das Bestimmen einer Energieversorgung der Heizeinrichtung,
b) Überprüfen, ob es sich bei einer aktuellen Zustandsänderung um eine normale Zustandsänderung oder eine anomale Zustandsänderung handelt und
c) Ausgeben von entsprechender Information an das und/oder durch das mobile Endgerät (10) zumindest bei Feststellung einer anomalen Zustandsänderung.

2. Verfahren nach Anspruch 1,
**dadurch gekennzeichnet, dass**
im Schritt a) eine anomale Zustandsänderung bei Überschreiten einer vorbestimmten Raumtemperaturänderung, festgestellt wird.

3. Verfahren nach Anspruch 1 oder 2,
**dadurch gekennzeichnet, dass**
im Schritt a) eine Kühlwassertemperatur, innerhalb eines Kraftfahrzeuges gemessen wird, wobei eine anomale Zustandsänderung bei Überschreiten eines vorbestimmten Kühlfluidtemperaturanstieges festgestellt wird.

4. Verfahren nach einem der vorhergehenden Ansprüche,
**dadurch gekennzeichnet, dass**
im Schritt a) eine anomale Zustandsänderung bei Überschreiten eines vorbestimmten Spannungsanstieges festgestellt wird.

5. Verfahren nach einem der vorhergehenden Ansprüche,
**dadurch gekennzeichnet, dass**
bei Feststellen eines anomalen Zustandes ein automatischer Anruf und/oder eine Textnachricht an das mobile Endgerät (10) erfolgt und/oder bei Feststellen eines anomalen Zustandes eine optische und/oder akustische Warnung in dem mobilen Endgerät, generiert wird.

6. Verfahren nach einem der vorhergehenden Ansprüche,
**dadurch gekennzeichnet, dass**
Schritt a) und/oder b) und/oder c) durch eine Eingabe in das mobile Endgerät (10) initiiert wird.

7. Verfahren nach einem der vorhergehenden Ansprüche,
**dadurch gekennzeichnet, dass**
Schritt b) und/oder c) durch das mobile Endgerät (10) oder die Basiseinrichtung (11) durchgeführt werden.

8. Verfahren nach einem der vorhergehenden Ansprüche,
**dadurch gekennzeichnet, dass**
die aktuelle Zustandsänderung auf die Möglichkeit eines Brandes und/oder eines Diebstahls überprüft wird.

9. System zur Überwachung einer Basiseinrichtung (11), insbesondere eines Gebäudes oder Gebäudeteiles oder eines Fahrzeuges, mittels eines mobilen Endgerätes (10), wobei die Basiseinrichtung (11) mindestens eine Heizeinrichtung aufweist, umfassend:
- mindestens eine Bestimmungseinrichtung zum Bestimmen eines aktuellen Zustandes der Basiseinrichtung (11) durch die Heizeinrichtung, umfassend das Bestimmen einer aktuellen Temperatur an oder in der Basiseinrichtung (11) durch einen Temperatursensor der Heizeinrichtung und/oder das Bestimmen einer Energieversorgung der Heizeinrichtung,
- eine Überprüfungseinrichtung zur Überprüfung, ob es sich bei einer aktuellen Zustandsänderung um eine normale Zustandsänderung oder eine anomale Zustandsänderung handelt und
- eine Ausgabeeinrichtung zum Ausgeben von entsprechender Information an das und/oder durch das mobile Endgerät (10) zumindest bei Feststellung einer anomalen Zustandsänderung.

10. System nach Anspruch 9,
**dadurch gekennzeichnet, dass**
mindestens ein Temperatursensor (13) zur Bestimmung einer Raumtemperatur und/oder mindestens ein Sensor (15) zur Bestimmung einer Kühlfluidtemperatur und/oder mindestens eine Bestimmungseinrichtung zur Bestimmung einer an dem Heizgerät anliegenden Energieversorgung vorgesehen ist.

11. System nach Anspruch 9 oder 10,
**dadurch gekennzeichnet, dass**
das mobile Endgerät (10) ein Mobiltelefon ist.

12. System nach einem der Ansprüche 9 bis 11,
**dadurch gekennzeichnet, dass**
die Überprüfungseinrichtung und/oder die Ausgabeeinrichtung Bestandteil(e) der Basiseinrichtung (11) und/oder des mobilen Endgerätes (10) sind.

13. Speichermedium, das Instruktionen enthält, die mindestens einen Prozessor dazu veranlassen, ein Verfahren gemäß den Ansprüchen 1 bis 8 zu implementieren, wenn die Instruktionen durch den Prozessor ausgeführt werden.

## Claims

1. A method for monitoring a base device (11) by means of a mobile terminal device (10), wherein the base device (11) has at least one heating device, comprising the steps of:
a) determining a current state of the base device (11) by the heating device, comprising determining a current temperature at or in the base device (11) by a temperature sensor of the heating device and/or determining an energy supply of the heating device,
b) checking whether a current change of state is a normal change of state or an abnormal change of state, and
c) outputting of corresponding information to and/or by the mobile terminal (10) at least when an abnormal change of state is detected.

2. The method according to claim 1,
**characterized in that**
in step a), an abnormal change of state is detected when a predetermined change of room temperature is exceeded.

3. The method according to claim 1 or 2,
**characterized in that**
in step a), a cooling water temperature within a motor vehicle is measured, wherein an abnormal change of state is detected when a predetermined cooling fluid temperature increase is exceeded.

4. The method according to any one of the preceding claims,
**characterized in that**
in step a), an abnormal change of state is detected when a predetermined voltage increase is exceeded.

5. The method according to any one of the preceding claims,
**characterized in that**,
when an abnormal state is detected, an automatic call and/or a text message to the mobile terminal (10) is performed, and/or, when an abnormal state is detected, a visual or acoustic warning is generated in the mobile terminal.

6. The method according to any one of the preceding claims,
**characterized in that**
step a) and/or b) and or c) is/are initiated by an input into the mobile terminal (10).

7. The method according to any one of the preceding claims,
**characterized in that**
step b) and/or step c) is/are executed by the mobile terminal (10) or the base device (11).

8. The method according to any one of the preceding claims,
**characterized in that**
the current change of state is checked for the possibility of fire and/or theft.

9. A system for monitoring a base device (11), in particular a building or part of a building or a vehicle, by means of a mobile terminal (10), wherein the base device (11) has at least one heating device, comprising:
- at least one determination device for determining a current state of the base device (11) by the heating device, comprising determining a current temperature at or in the base device (11) by a temperature sensor of the heating device and/or determining an energy supply of the heating device,
- a checking device for checking whether a current change of state is a normal change of state or an abnormal change of state, and
- an outputting device for outputting corresponding information to and/or by the mobile terminal (10), at least when an abnormal state of change is detected.

10. The system according to claim 9,
**characterized in that**
at least one temperature sensor (13) for determining a room temperature and/or at least one sensor (15) for determining a cooling fluid temperature and/or at least one determining device for determining an energy supply applied to the heating device is/are provided.

11. The system according to claim 9 or 10,
**characterized in that**
the mobile terminal (10) is a mobile phone.

12. The system according to any one of claims 9 to 11,
**characterized in that**
the checking device and/or the outputting device is/are (a) component(s) of the base device (11) and/or of the mobile terminal (10).

13. A storage medium including instructions which cause at least one processor to implement a method according to the claims 1 to 8, when the instructions are executed by the processor.

## Revendications

1. Procédé de surveillance d'un dispositif de base (11) moyennant un terminal mobile (10), sachant que le dispositif de base (11) présente au moins un dispositif de chauffage, comprenant les étapes suivantes :
a) détermination d'un état actuel du dispositif de base (11) par le dispositif de chauffage, comprenant la détermination d'une température actuelle sur ou dans le dispositif de base (11) par un capteur de température du dispositif de chauffage et/ou la détermination d'une alimentation en énergie du dispositif de chauffage,
b) fait de vérifier s'il s'agit, dans le cas d'un changement d'état actuel, d'un changement d'état normal ou d'un changement d'état anormal et
c) émission d'une information correspondante au et/ou par le terminal mobile (10) du moins en cas de constatation d'un changement d'état anormal.

2. Procédé selon la revendication 1,
**caractérisé en ce que**
à l'étape a), un changement d'état anormal est constaté en cas de dépassement d'un changement de température ambiante prédéterminé.

3. Procédé selon la revendication 1 ou 2,
**caractérisé en ce que**
à l'étape a), une température d'eau de refroidissement est mesurée à l'intérieur d'un véhicule motorisé, sachant qu'un changement d'état anormal est constaté en cas de dépassement d'une hausse de température de fluide de refroidissement prédéterminée.

4. Procédé selon l'une des revendications précédentes,
**caractérisé en ce que**
à l'étape a), un changement d'état anormal est constaté en cas de dépassement d'une hausse de tension prédéterminée.

5. Procédé selon l'une des revendications précédentes,
**caractérisé en ce que**
en cas de constatation d'un état anormal, un appel automatique et/ou un message textuel est envoyé au terminal mobile (10) et/ou
en cas de constatation d'un état anormal, un avertissement optique et/ou acoustique est généré dans le terminal mobile.

6. Procédé selon l'une des revendications précédentes,
**caractérisé en ce que**
l'étape a) et/ou b) et/ou c) est initiée par une saisie dans le terminal mobile (10).

7. Procédé selon l'une des revendications précédentes,
**caractérisé en ce que**
l'étape b) et/ou c) sont effectuées par le terminal mobile (10) ou le dispositif de base (11).

8. Procédé selon l'une des revendications précédentes,
**caractérisé en ce que**
le changement d'état actuel est vérifié quant à la possibilité d'un incendie et/ou d'un vol.

9. Système de surveillance d'un dispositif de base (11), en particulier d'un bâtiment ou d'une partie de bâtiment ou d'un véhicule, moyennant un terminal mobile (10), sachant que le dispositif de base (11) présente au moins un dispositif de chauffage, comprenant :
- au moins un dispositif de détermination destiné à déterminer un état actuel du dispositif de base (11) par le dispositif de chauffage, comprenant la détermination d'une température actuelle sur ou dans le dispositif de base (11) par un capteur de température du dispositif de chauffage et/ou la détermination d'une alimentation en énergie du dispositif de chauffage,
- un dispositif de vérification destiné à vérifier s'il s'agit, dans le cas d'un changement d'état actuel, d'un changement d'état normal ou d'un changement d'état anormal et
- un dispositif d'émission destiné à émettre une information correspondante au et/ou par le terminal mobile (10) du moins en cas de constatation d'un changement d'état anormal.

10. Procédé selon la revendication 9,
**caractérisé en ce que**
au moins un capteur de température (13) destiné à déterminer une température ambiante et/ou au moins un capteur (15) destiné à déterminer une température de fluide de refroidissement et/ou au moins un dispositif de détermination destiné à déterminer une alimentation en énergie présente sur le dispositif de chauffage est prévu.

11. Système selon la revendication 9 ou 10,
**caractérisé en ce que**
le terminal mobile (10) est un téléphone mobile.

12. Système selon l'une des revendications 9 à 11,
**caractérisé en ce que**
le dispositif de vérification et/ou le dispositif d'émission sont des composants du dispositif de base (11) et/ou du terminal mobile (10).

13. Support de stockage contenant des instructions qui font implémenter à au moins un processeur un procédé selon les revendications 1 à 8 lorsque les instructions sont exécutées par le processeur.
